(19) Europäisches Patentamt
European Patent Office
Office européen des brevets

(11) **EP 1 222 456 B1**

(12) **EUROPÄISCHE PATENTSCHRIFT**

(45) Veröffentlichungstag und Bekanntmachung des Hinweises auf die Patenterteilung:
**30.11.2005   Patentblatt 2005/48**

(21) Anmeldenummer: **00967701.4**

(22) Anmeldetag: **19.09.2000**

(51) Int Cl.$^7$: **G01N 27/419**

(86) Internationale Anmeldenummer:
**PCT/EP2000/009142**

(87) Internationale Veröffentlichungsnummer:
**WO 2001/025778 (12.04.2001 Gazette 2001/15)**

(54) **VERFAHREN ZUR BESTIMMUNG DES ABGAS-LAMBDAWERTES EINER BRENNKRAFTMASCHINE**

METHOD FOR DETECTING THE LAMBDA VALUE OF THE EXHAUST GAS IN AN INTERNAL COMBUSTION ENGINE

PROCEDE PERMETTANT DE DETERMINER LA VALEUR LAMBDA DES GAZ D'ECHAPPEMENT D'UN MOTEUR A COMBUSTION INTERNE

(84) Benannte Vertragsstaaten:
**DE FR GB**

(30) Priorität: **01.10.1999   DE 19947364**

(43) Veröffentlichungstag der Anmeldung:
**17.07.2002   Patentblatt 2002/29**

(73) Patentinhaber: **Volkswagen Aktiengesellschaft 38436 Wolfsburg (DE)**

(72) Erfinder:
 • **DAETZ, Michael 38473 Tiddische (DE)**
 • **LANG, Axel 38304 Wolfenbüttel (DE)**
 • **HAHN, Hermann 38165 Lehre (DE)**

(74) Vertreter: **Meyer, Enno Augsburger Strasse 24 82110 Germering (DE)**

(56) Entgegenhaltungen:
**EP-A- 0 580 206**

 • **PATENT ABSTRACTS OF JAPAN vol. 1998, no. 01, 30. Januar 1998 (1998-01-30) & JP 09 236578 A (NGK SPARK PLUG CO LTD), 9. September 1997 (1997-09-09)**
 • **PATENT ABSTRACTS OF JAPAN vol. 010, no. 330 (P-514), 11. November 1986 (1986-11-11) & JP 61 137055 A (NGK INSULATORS LTD), 24. Juni 1986 (1986-06-24)**

**Beschreibung**

Die Erfindung betrifft ein Verfahren zur Bestimmung des Abgas-Lambdawertes einer Brennkraftmaschine, wobei das Abgassystem der Brennkraftmaschine zur LambdaMessung über Schadstoffsensoren nach dem Prinzip der Zweizellen-Grenzstromsonde verfügt. Ferner betrifft die Erfindung ein Verfahren und ein System zur Steuerung dieses Abgas-Lambdawertes.

Zur genauen Steuerung der Zusammensetzung des Gemisches in Brennkraftmaschinen, insbesondere bei magerlauffähigen Brennkraftmaschinen, die mit entsprechenden Abgasreinigungsvorrichtungen im Dreiwege-Katalysator oder NOx-Speicher-Katalysator ausgerüstet sind, sind in deren Abgastrakten Sonden vorhanden, die den Lambda-Wert des Abgases bestimmen und ein entsprechendes elektrisches Signal abgeben. Dieses Meßsignal wird an das Motorsteuergerät weitergeleitet, von diesem verarbeitet und zur Berechnung der Parameter verwendet, die die Gemischzusammensetzung steuern, was im allgemeinen als Lambda-Regelung bezeichnet wird.

Dabei ist die Anforderung an die Genauigkeit der Lambda-Sonden insbesondere bei einem Lambda von ungefähr 1 sehr hoch, da sich der Lambdawert des Abgases zur Erzielung einer hohen Konvertierung der Schadstoffe bei einem Abgassystem mit Dreiwege-Katalysator in einem sehr engen Fenster befinden muß, nämlich in diesem Beispiel in einem Bereich von Lambda zwischen 0,995 bis 1,005.

Eine Übersicht über gebräuchliche Lambdasonden wird beispielsweise von Wiedenmann et al. in H. Schaumburg, "Sensoranwendungen", B.G. Teubner, Stuttgart 1995, Seite 371 ff. gegeben.

Derzeit sind überwiegend Sprung-Lambdasonden bei Brennkraftmotoren mit Dreiwege-Katalysatoren im Einsatz. Das Meßsignal dieser Sprung-Lambdasonden ist eine elektrische Spannung, die von der Gleichgewichts-Sauerstoffkonzentration, die sich an den katalytisch aktiven Elektroden der Sonde einstellt, abhängt. Diese Gleichgewichts-Sauerstoffkonzentration ändert sich bei dem Wert Lambda = 1 um mehrere Zehnerpotenzen, was den Namen Sprung-Lambdasonden bedingt. Daher haben diese Sonden bei Lambda = 1 einen sehr steilen und stabilen Kennlinienverlauf und besitzen die gewünschte Genauigkeit. Ein Nachteil dieser Sprung-Lambdasonden ist jedoch, daß außerhalb eines engen Bereichs von Lambda ungefähr 1 der Kennlinienverlauf sehr flach verläuft. Daher werden Sprung-Lambdasonden für Regelungen der Betriebspunkte, an denen die Brennkraftmaschine nicht bei Lambda ungefähr 1 betrieben wird, wie dies beispielsweise für einen Magerlauf der Fall ist, nicht verwendet.

Eine weitere Gattung von Lambdasonden ist durch die sogenannten Breitband-Lambdasonden gegeben. Sie ermöglichen die Messung des Abgas-Lambdawertes in einem weiten Bereich. Ein Vertreter dieser Gattung ist die Zweizellen-Grenzstromsonde, bei der das Abgas durch eine Diffusionsbarriere in eine Meßkammer gelangt. In dieser befindet sich die Elektrode einer Konzentrationszelle, die einer Sprung-Lambdasonde ähnelt. Die Ausgangsspannung dieser Konzentrationszelle wird einem Regler zugeführt und dort mit einer Spannung von üblicherweise 450 mV verglichen, die der Gleichgewichts-Sauerstoffkonzentration bei Lambda = 1 entspricht. Das Ausgangssignal dieses Reglers steuert den Strom durch die zweite Zelle des Sensors, die als Pumpzelle bezeichnet wird. Dieser Strom bewirkt bei magerem Gemisch einen Sauerstofftransport aus der Meßkammer heraus. Im eingeschwungenen Zustand ist dieser Strom gleich dem Diffusionsstrom durch die Diffusionsbarriere. Dieser Strom bildet das Ausgangssignal des Sensors und ist proportional zum Sauerstoffpartialdruck im Abgas.

Bei fettem Abgas diffundieren die nichtoxidierten Abgaskomponenten durch die Diffusionsbarriere in einer derartigen Zweizellen-Grenzstromsonde in die Meßkammer und reagieren dort an den katalytisch aktiven Elektroden mit dem jetzt von der Pumpzelle herangeführten Sauerstoff. Der fließende Strom ist eine Funktion der Summe der Partialdrücke der nichtoxidierten Abgaskomponenten multipliziert mit ihren jeweiligen Diffusionskoeffizienten. Bei den für die Auswertung dieser Sensorsignale verwendeten Kennlinien wird üblicherweise unterstellt, daß sich das fette Abgas gemäß dem Wassergasgleichgewicht zusammensetzt.

Diese beschriebenen Zweizellen-Grenzstromsonden ermöglichen daher die Messung des Abgas-Lambdawertes in einem weiten Bereich und zwar von Lambda $\cong$ 0,7 bis Lambda $\rightarrow$ unendlich. Da aber wegen der stark unterschiedlichen Diffusionskoeffizienten der Abgaskomponenten die Abgaszusammensetzung in das Meßergebnis eingeht, was als Querempfindlichkeit bezeichnet wird, ist die Genauigkeit der Grenzstromsonden bei Lambda ungefähr 1 wesentlich geringer als die der Sprung-Lambdasonden.

Schadstoffsensoren, wie beispielsweise NOx- oder HC-Sensoren, haben einen Aufbau, der ebenfalls auf demjenigen der Zweizellen-Grenzstromsonde basiert. Auch hier wird in einer ersten Meßkammer nach dem Prinzip der Zweizellen-Grenzstromsonde eine Gleichgewichts-Sauerstoffkonzentration eingestellt. Der Pumpstrom der zugehörigen Pumpzelle verhält sich daher ähnlich dem der Zweizellen-Grenzstromsonde und ist ein Maß für den Abgas-Lambdawert. Dabei sind die Elektroden in der ersten Meßkammer inaktiv gegenüber der zu messenden Komponente, die dann in einer zweiten Meßkammer umgesetzt und ihre Konzentration über eine Strommessung bestimmt wird.

Ein derartiger Schadstoffsensor zur Messung von NOx ist beispielsweise in H. Inagaki et. al. "NOx Meter Utilizing Zr02 Pumping Cell", SAE 980266 bekannt. Es handelt sich dabei um einen amperiometrischen Sensor, der aus zwei Zellen besteht. Dabei fließt Abgas in die erste Zelle, die eine Sauerstoff-Pumpzelle ist, in der NOx nicht chemisch umgesetzt wird. Bei der zweiten Zelle handelt es sich ebenfalls um eine Sauerstoff-Pumpzelle, die aber den Sauerstoff aus dem NOx durch Dissoziation in O2 und N2 umsetzen kann. Dabei ist der Sauerstoff-Pumpstrom in der zweiten Zelle proportional zur NOx-Konzentration in der zweiten Zelle und im Abgas.

Der Lambdawert des Abgases wird aus dem Pumpstrom der ersten Zelle ermittelt. Da aber die erste Zelle kein NOx umsetzt, ergibt sich im Lambdawert eine Abweichung entsprechend dem Sauerstoffanteil des NOx. Allerdings sind bei der Anwendung eines derartigen Sensors nach einem Katalysator die Genauigkeitsanforderung an den Lambdawert besonders hoch, so daß der bekannte Sensor dafür nicht geeignet ist.

Daher ist die Genauigkeit der Lambdamessung des erläuternden Schadstoffsensors bei Lambda ungefähr 1 nur mit einer ähnlichen Genauigkeit wie bei den Lambda-Zweizellen-Grenzstromsonden möglich. Üblicherweise sind derartige Schadstoffsensoren aber für eine Verwendung in Abgasrichtung stromabwärts des Katalysators vorgesehen, wo die Genauigkeitsanforderungen noch höher sind als bei den üblicherweise stromaufwärts des Katalysators angeordneten Breitband-Lambdasonden. Diese Abweichungen der stromaufwärts des Katalysators liegenden Sonde können zum Teil durch die zusätzliche Nach-Kat-Regelung aufgefangen werden, die auf dem Meßsignal der Lambdasonde hinter dem Katalysator, beispielsweise der Pumpzelle der Schadstoffsonde, basiert.

Erschwerend zur geringeren Genauigkeit aufgrund der Querempfindlichkeit bei Lambda ungefähr 1 im Vergleich zu Sprung-Lambdasonden kommt eine viel geringere Auflösung hinzu.

EP-A-0 580 206 beschreibt eine Schadstoffzelle nach dem Zwei-Zellenprinzip entsprechend dem Oberbegriff des Patentanspruchs 1, wobei der Lambdawert aus der Richtung und der Größe eines Ionenstroms einer Pumpzelle der Schadstoffzelle bestimmt wird.

Der Erfindung liegt daher die Aufgabe zugrunde, ein Verfahren zur genauen Bestimmung sowie zur Steuerung des Abgas-Lambdawertes von Brennkraftmaschinen anzugeben, wobei der Abgastrakt über eine Schadstoffsonde nach dem Prinzip der Zweizellen-Grenzstromsonde verfügt, wobei ein breiter Lambdabereich abgedeckt und eine Genauigkeit und Auflösung erzielt wird, wie sie von Sprung-Lambdasonden her bekannt ist.

Diese Aufgabe wird durch die Merkmale des Verfahrens zur Bestimmung des Lambdawertes des Abgases einer Brennkraftmaschine nach Anspruch 1 sowie ein Verfahren zur Steuerung der Gemischzusammensetzung des Gemisches einer Brennkraftmaschine nach Anspruch 4 gelöst. Bevorzugte Ausgestaltungen der Erfindung sind Gegenstand der Unteransprüche.

Die Erfindung wird anhand bevorzugter Ausführungsformen, die in den Zeichnungen dargestellt sind, näher erläutert.

Fig. 1     zeigt eine schematische Darstellung einer Schadstoffzelle nach dem Zwei-Zellen-Prinzip, und

Fig.2     zeigt den gemessenen Signalverlauf der Spannung zwischen Referenz- und Pumpelektrode eines Zweizellen-Grenzstromsensors nach Fig. 1.

Fg. 1 zeigt einen Schadstoffsensor nach dem Zwei-Zellen-Prinzip. Abgas A tritt durch eine erste Diffusionspassage 1 in eine erste Diffusionskammer 2 ein. Eine daran anschließende erste O2-Pumpzelle 3 weist eine innere und eine äußere Elektrode E2 und E1 auf. Durch Anlegen einer Pumpspannung an die Elektroden E1 und E2 der Pumpzelle 3 werden Sauerstoffionen aus der Zelle gepumpt, wobei nur freier Sauerstoff und nicht der Sauerstoff des NOx abgepumpt wird. Das vom Sauerstoff befreite Abgas diffundiert durch eine zweite Diffusionspassage 4 über eine zweite Diffusionskammer 5 in eine zweite O2-Pumpzelle 6, die eine innere und äußere Pumpelektrode E5 und E6 aufweist. In der zweiten Kammer dissoziiert das NOx in N2 und O2. Ferner weist der Schadstoffsensor eine O2-Referenzzelle 7 mit Elektroden E3 und E4 auf.

Der Lambda-Wert wird aus der Spannungsdifferenz zwischen der äußeren Pumpelektrode E1 der ersten Zelle 3 und der inneren Elektrode E4 der Referenzzelle ermittelt. Dabei wird im Bereich Lambda ≈ 1 eine Genauigkeit erzielt, wie sie von Sprung-Lambdasonden her bekannt ist Die gemessene Spannung ergibt sich aus der Summe der Spannungen der ersten Pumpzelle 3 und der Referenzzelle 7. Die innere Elektrode E2 der ersten Pumpzelle und die äußere Elektrode E3 der Referenzzelle 7 (= Elektroden der ersten Diffusionskammer) weisen beide eine Unempfindlichkeit gegenüber dem Sauerstoffgehalt des NOx auf. Da sich aber beide Spannungen kompensieren, wirkt sich in dem erfindungsgemäßen Verfahren dieser Effekt nicht negativ aus.

Genauer, die gemessene Spannung ergibt sich mittels der bekannten Nerst-Gleichungen zu:

$$U\_Referenzzelle = c \cdot [\ln(pO2(\text{Referenzzelle innere Elektrode E4})) -$$

$$\ln(pO2(\text{Referenzzelle äußere Elektrode E3}))]$$

$$U\_1.Pumpzelle = c - [\ln(pO2(\text{Pumpzelle innere Elektrode E2})) - \ln(PO2(\text{Pumpzelle}$$

äußere Elektrode E1))],

wobei p02 der Partialdruck des Sauerstoff bedeutet und c eine Konstante ist.

Da die folgende Gleichung gilt:

p02(Pumpkammer innere Elektrode E2) = pO2(Referenzzelle äußere Elektrode E3),

ergibt sich die Spannung zwischen den Elektroden U_E4E1 als Summe der Spannungen der Referenzzelle U_Referenzzelle und der ersten Pumpzelle U_Pumpzelle, d.h.:

U_E4E1 = c · [ln(pO2(Referenzzelle innere Elektrode E4)) - ln(p02(Pumpzelle äußere

Elektrode E1))]

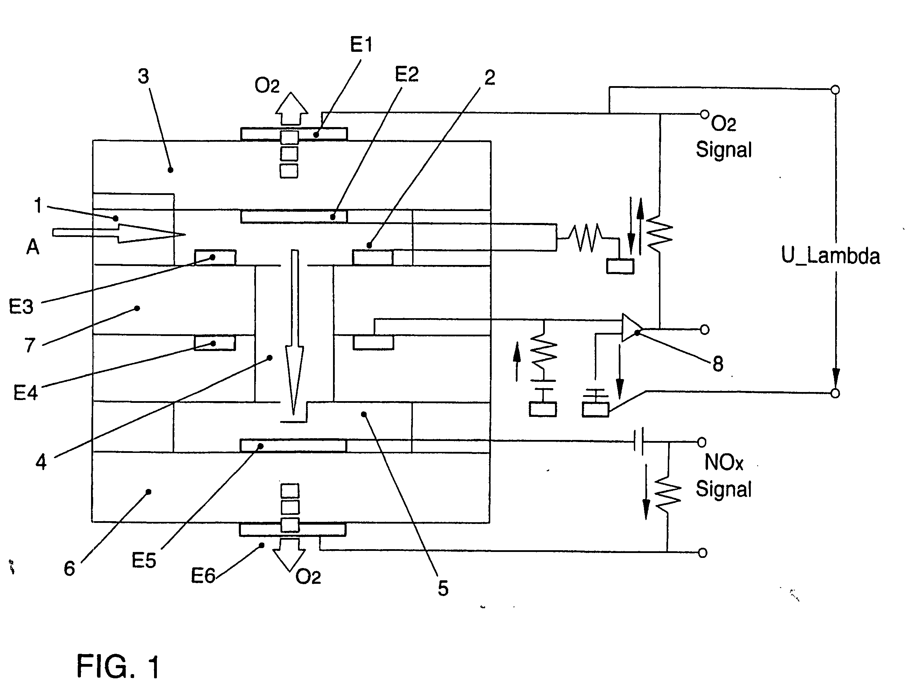

Da vom Verstärker 8 das Potential an der inneren Elektrode E4 der Referenzzelle 7 auf einen konstanten Wert Vref geregelt wird, kann das Meßsignal U_Lambda an der äußeren Elektrode E1 der Pumpzelle 3 als Summe der Referenzspannung Vref und der Spannung U_E4E1 abgegriffen und einem Analog/Digital-Wandler des Motorsteuergeräts zugeführt werden (nicht dargestellt). Ferner sind in Fig. 1 noch das Meßsignal für den Sauerstoffgehalt des Abgases und das NOx-Signal sowie das Meßnetzwerk dargestellt.

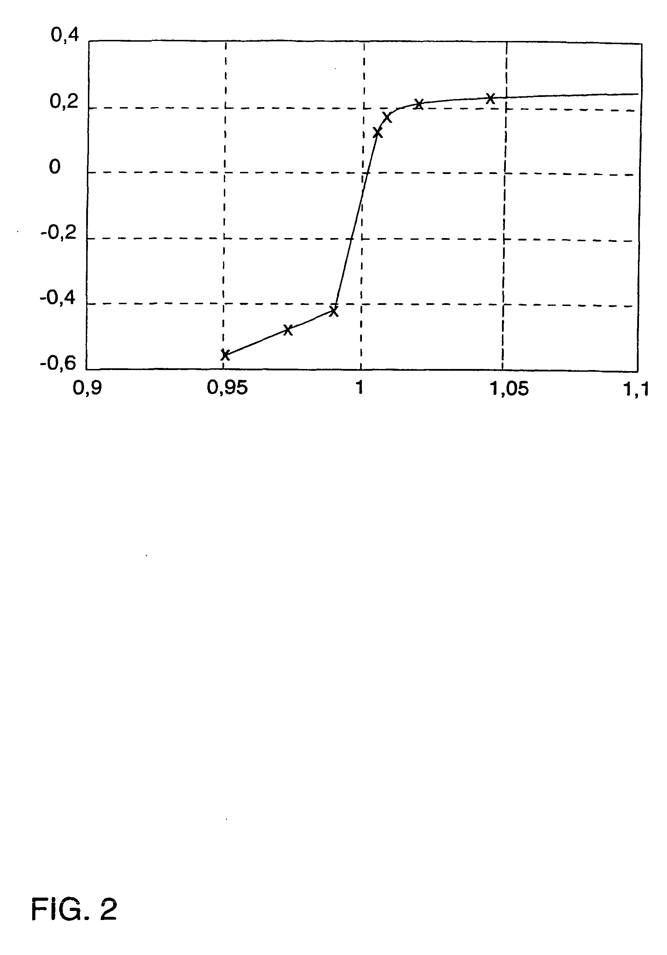

Fig. 2 gibt einen gemessenen Signalverlauf des Zusammenhangs zwischen Lambda sowie der Meßspannung U_E4E1 zwischen Referenz- und Pumpelektrode eines obigen Schadstoffsensors nach dem Zwei-Zellen-Prinzip wieder. Deutlich erkennbar ist, daß der Signalverlauf demjenigen einer Sprung-Lambdasonde ähnelt.

## BEZUGSZEICHENLISTE

| | |
|---|---|
| 1 | erste Diffusionspassage |
| 2 | erste Diffusionskammer |
| 3 | erste Pumpzelle |
| 4 | zweite Diffusionspassage |
| 5 | zweite Diffusionskammer |
| 6 | zweite Pumpzelle |
| 7 | Referenzzelle |
| 8 | Verstärker |
| E1 | äußere Elektrode erste Pumpzelle |
| E2 | innere Elektrode erste Pumpzelle |
| E3 | äußere Elektrode Referenzzelle |
| E4 | innere Elektrode Referenzzelle |
| E5 | innere Elektrode zweite Pumpzelle |
| E6 | äußere Elektrode zweite Pumpzelle |
| A | Abgasstrom |
| U_E4E1 | Meßspannung |

## Patentansprüche

1. Verfahren zur Bestimmung des Lambdawertes des Abgases im Abgastrakt einer Brennkraftmaschine, wobei eine Schadstoffsonde nach dem Zwei-Zellen-Prinzip, die eine erste Pumpzelle (3), eine zweite Pumpzelle (6) sowie eine zwischen den Pumpzellen (3, 6) angeordnete Referenzzelle (7) aufweist, im Abgasstrom angeordnet ist, **dadurch gekennzeichnet, daß** der Lambdawert aus den elektrischen Spannungen der ersten Pumpzelle (3) und der Referenzzelle (7) ermittelt wird, wobei die Meßspannung als Summe der Spannungen über der Referenzzelle (7) und der ersten Pumpzelle (3) gebildet wird.

2. Verfahren nach Anspruch 1, **dadurch gekennzeichnet, daß** die erste Pumpzelle (3) eine äußere Elektrode (E1) und eine innere Elektrode (E2) aufweist, die Refererizzelle (7) eine äußere Elektrode (E3) und eine innere Elektrode (E4) aufweist, wobei für die erste Pumpzelle (3) und die Referenzzelle (7) außen durch die Richtung des 02-Transports in der ersten Pumpzelle (3) definiert ist, daß die Spannung an der inneren Elektrode (E4) der Referenzzelle (7) mittels eines Verstärkers (8) auf einen konstanten Wert geregelt wird und die Meßspannung als Summe der Spannung über der Referenzzelle (7) und der ersten Pumpzelle (3) und der Spannung an der inneren Elektrode (E4) der Referenzzelle (7) gebildet wird.

3. Verfahren Anspruch 1 oder 2, **dadurch gekennzeichnet, daß** die Meßspannung einem AID-Wandler zugeführt wird.

4. Verfahren zur Steuerung der Gemischzusammensetzung des Gemisches einer Brennkraftmaschine, die in ihrem Abgastrakt eine Schadstoffsonde nach dem Zwei-Zellen-Prinzip aufweist, wobei der Lambdawert des Abgases gemäß dem Verfahren nach einem der vorangegangenen Ansprüche ermittelt wird, und der gemessene Lambdawert zur Steuerung der Gemischzusammensetzung eingesetzt wird.

5. Brennkraftmaschine zur Durchführung des Verfahrens nach Anspruch 4 mit einer Motorsteuereinheit und einem Abgastrakt, der einen Katalysator und eine im Abgasstrom angeordnete Schadstoffsonde nach dem Zwei-Zellen-Prinzip aufweist, die eine erste Pumpzelle (3), eine zweite Pumpzelle (6) sowie eine Zwischen den Pumpzellen (3, 6) angeordnete Referenzzelle (7) aufweist, wobei die Motorsteuereinheit den Lambdawert aus den elektrischen Spannungen der ersten Pumpzelle und der Referenzzelle ermittelt, wobei die Messspannung als Summe der Spannungen über der Referenzzelle und der ersten Pumpzelle aus der Meßspannung gebildet wird, und aus dem Lambdawert die Gemischzusammensetzung bestimmt

6. Brennkraftmaschine nach Anspruch 5, **dadurch gekennzeichnet, daß** die Sonde im Abgasstrang nach dem Katalysator angeordnet ist

7. Brennkraftmaschine nach Anspruch 5, **dadurch gekennzeichnet, daß** die Sonde im Abgasstrang vor dem Katalysator angeordnet ist.

## Claims

1. Method for determining the lambda value of the exhaust gas in the exhaust section of an internal combustion engine, in which a pollutant sensor based on the two-cell principle, which includes a first pump cell (3), a second pump cell (6) and a reference cell (7) arranged between the pump cells (3, 6), is arranged in the exhaust-gas stream, **characterized in that** the lambda value is determined from the electric voltages of the first pump cell (3) and the reference cell (7), the measurement voltage being formed as the sum of the voltages across the reference cell (7) and the first pump cell (3).

2. Method according to Claim 1, **characterized in that** the first pump cell (3) has an outer electrode (E1) and an inner electrode (E2), the reference cell (7) has an outer electrode (E3) and an inner electrode (E4), the term outer for the first pump cell (3) and the reference cell (7) being defined by the direction of 02 transport in the first pump cell (3), **in that** the voltage at the inner electrode (E4) of the reference cell (7) is set to a constant value by means of an amplifier (8), and the measurement voltage is formed as the sum of the voltage across the reference cell (7) and the first pump cell (3) and of the voltage at the inner electrode (E4) of the reference cell (7).

3. Method according to Claim 1 or 2, **characterized in that** the measurement voltage is fed to an A/D converter.

4. Method for controlling the composition of the mix in an internal combustion engine which, in its exhaust section, has a pollutant sensor based on the two-cell principle, in which the lambda value of the exhaust gas is determined using the method according to one of the preceding claims, and the measured lambda value is used to control the composition of the mix.

5. Internal combustion engine for carrying out the method according to Claim 4, having an engine control unit and an exhaust section, which includes a catalytic converter and a pollutant sensor which is arranged in the exhaust-gas stream, is based on the two-cell principle and includes a first pump cell (3), a second pump cell (6) and a reference cell (7) arranged between the pump cells (3, 6), the engine control unit determining the lambda value from the electric voltages of the first pump cell and the reference cell, the measurement voltage being formed as the sum of the voltages across the reference cell and the first pump cell from the measurement voltage, and the composition of the mix being determined from the lambda value.

6. Internal combustion engine according to Claim 5, **characterized in that** the sensor is arranged in the exhaust section downstream of the catalytic converter.

7. Internal combustion engine according to Claim 5, **characterized in that** the sensor is arranged in the exhaust section upstream of the catalytic converter.

**Revendications**

1. Procédé pour déterminer la valeur lambda des gaz d'échappement dans la section d'échappement d'un moteur à combustion interne, une sonde de substances nocives selon le principe à deux cellules, qui présente une première cellule de pompage (3), une deuxième cellule de pompage (6) et une cellule de référence (7) disposée entre les cellules de pompage (3, 6), étant disposée dans le flux de gaz d'échappement, **caractérisé en ce que** la valeur lambda est déterminée à partir des tensions électriques de la première cellule de pompage (3) et de la cellule de référence (7), la tension de mesure étant formée en tant que somme des tensions passant par la cellule de référence (7) et par la première cellule de pompage (3).

2. Procédé selon la revendication 1, **caractérisé en ce que** la première cellule de pompage (3) présente une électrode extérieure (E1) et une électrode intérieure (E2) et la cellule de référence (7) présente une électrode extérieure (E3) et une électrode intérieure (E4), la notion de position extérieure étant définie pour la première cellule de pompage (3) et pour la cellule de référence (7) par la direction du transport d'oxygène dans la première cellule de pompage (3), et **en ce que** la tension à l'électrode intérieure (E4) de la cellule de référence (7) est régulée au moyen d'un amplificateur (8) à une valeur constante, et la tension de mesure est formée en tant que somme de la tension passant par la cellule de référence (7) et par la première cellule de pompage (3) et de la tension à l'électrode intérieure (E4) de la cellule de référence (7).

3. Procédé selon la revendication 1 ou 2, **caractérisé en ce que** la tension de mesure est apportée à un convertisseur analogique-numérique.

4. Procédé pour commander la composition du mélange d'un moteur à combustion interne qui présente dans sa section d'échappement une sonde de substances nocives selon le principe à deux cellules, la valeur lambda des gaz d'échappement étant déterminée d'après le procédé selon l'une des revendications précédentes, et la valeur lambda mesurée étant utilisée pour commander la composition du mélange.

5. Moteur à combustion interne pour la mise en oeuvre du procédé selon la revendication 4, avec une unité de gestion du moteur et une section d'échappement qui comprend un catalyseur et une sonde de substances nocives selon le principe à deux cellules qui est disposée dans le flux de gaz d'échappement et qui présente une première cellule de pompage (3), une deuxième cellule de pompage (6) et une cellule de référence (7) disposée entre les cellules de pompage (3, 6), l'unité de gestion du moteur déterminant la valeur lambda à partir des tensions électriques de la première cellule de pompage et de la cellule de référence, la tension de mesure étant formée en tant que somme des tensions passant par la cellule de référence et par la première cellule de pompage, et la composition du mélange étant déterminée d'après la valeur lambda.

6. Moteur à combustion interne selon la revendication 5, **caractérisé en ce que** la sonde est disposée après le catalyseur dans la section d'échappement.

7. Moteur à combustion interne selon la revendication 5, **caractérisé en ce que** la sonde est disposée avant le catalyseur dans la section d'échappement.

FIG. 1

EP 1 222 456 B1

FIG. 2